# EUROPEAN PATENT APPLICATION

(11) **EP 2 816 554 A2**
(43) Date of publication of application: **24.12.2014**
(21) Application number: 14170343.9
(22) Date of filing: 28.05.2014
(51) Int. Cl.: G10L 15/22, H04N 21/422, G10L 17/22

(54) **Method of executing voice recognition of electronic device and electronic device using the same**

(30) Priority: 28.05.2013 US 201361828066 P; 27.05.2014 KR 20140063805
(71) Applicant: Samsung Electronics Co., Ltd, Gyeonggi-do 443-742 (KR)
(72) Inventor: Lee, Sanghoon, 443-742 Gyeonggi-do (KR); Kim, Kyungtae, 443-742 Gyeonggi-do (KR); Chakladar, Subhojit, 443-742 Gyeonggi-do (KR); Lee, Taejin, 443-742 Gyeonggi-do (KR); Jung, Seokyeong, 443-742 Gyeonggi-do (KR)
(74) Representative: Nederlandsch Octrooibureau

(57) **Abstract**

A method of performing a voice command function in an electronic device includes detecting voice of a user, acquiring one or more pieces of attribute information from the voice, and authenticating the user by comparing the attribute information with pre-stored authentic attribe information, using a recognition model. An electronic device includes a voice input module configured to detect a voice of a user, a first processor configured to acquire one or more pieces of attribute information from the voice and authenticate the user by comparing the attribute information with a recognition model, and a second processor configured to when the attribute information matches the recognition mode, activate the voice command function, receive a voice command of the user, and execute an application corresponding to the voice command. Other embodiments are also disclosed.

## Description

### TECHNICAL FIELD

The present application relates generally to a method of executing voice recognition in an electronic device and an electronic device using the same.

### BACKGROUND

Electronic devices have evolved into the form of portable terminals, such as smart phones, and provide various useful functions to users through applications, which provide various functions.

### SUMMARY

A voice command function may be one of the various functions provided by an electronic device. Through the voice command function, various applications of the electronic device can be more conveniently executed and operations provided by the applications can be controlled.

However, a user of the electronic device may feel an inconvenience in that the user is required to activate the voice command function through a separate input device, such as a key, a button, or a touch panel.

Various embodiments of the present disclosure can activate the voice command function by recognizing a voice of the user rather than through the separate input device, such as the key, the button, or the touch panel. Further, it is possible to reduce power by using two or more separated processors including a processor for activating the voice command function and a processor for executing an application according to a user's command. Additionally, only a pre-stored user can activate the voice command function through speaker-dependent voice recognition, so that security of the electronic device can be reinforced.

To address the above-discussed deficiencies, it is a primary object to provide a method of performing a voice command function in an electronic device. The method includes: detecting a voice of a user; determining one or more pieces of attribute information from the voice; and authenticating the user by comparing the attribute information with a recognition model.

In accordance with another aspect of the present disclosure, an electronic device is provided. The electronic device includes: a voice input module for detecting a voice of a user; a first processor for determining one or more pieces of attribute information from the voice and authenticating the user by comparing the attribute information with a recognition model; and a second processor for, when the attribute information matches the recognition mode, activating the voice command function, receiving a voice command of the user, and executing an application corresponding to the voice command.

In accordance with another aspect of the present disclosure, a machine-readable storage medium storing commands is provided. When the commands are executed by one or more processors, the machine-readable storage medium is configured to allow the one or more processors to perform one or more operations. The one or more operations include: detecting a voice of a user; determining one or more pieces of attribute information from the voice; and authenticating the user by comparing the attribute information with a recognition model.

An electronic device according to various embodiments of the present disclosure can more effectively perform a voice command function of the electronic device.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a network environment including an electronic device according to embodiments of the present disclosure;
FIG. 2 is a block diagram of an electronic device according to embodiments of the present disclosure;
FIG. 3 illustrates a programming module according to embodiments of the present disclosure;
FIG. 4 illustrates a configuration of a voice recognition system according to embodiments of the present disclosure;
FIG. 5 is a flowchart illustrating a method of inputting a voice into an electronic device according to embodiments of the present disclosure and executing an application;
FIG. 6 is a flowchart illustrating a method of generating a recognition model of an electronic device according to embodiments of the present disclosure;
FIG. 7 is a flowchart illustrating a method of detecting a voice in consideration of an environment around an electronic device according to embodiments of the present disclosure; and
FIG. 8 is a flowchart illustrating a method of generating and verifying voice information by an electronic device according to embodiments of the present disclosure.

### DETAILED DESCRIPTION

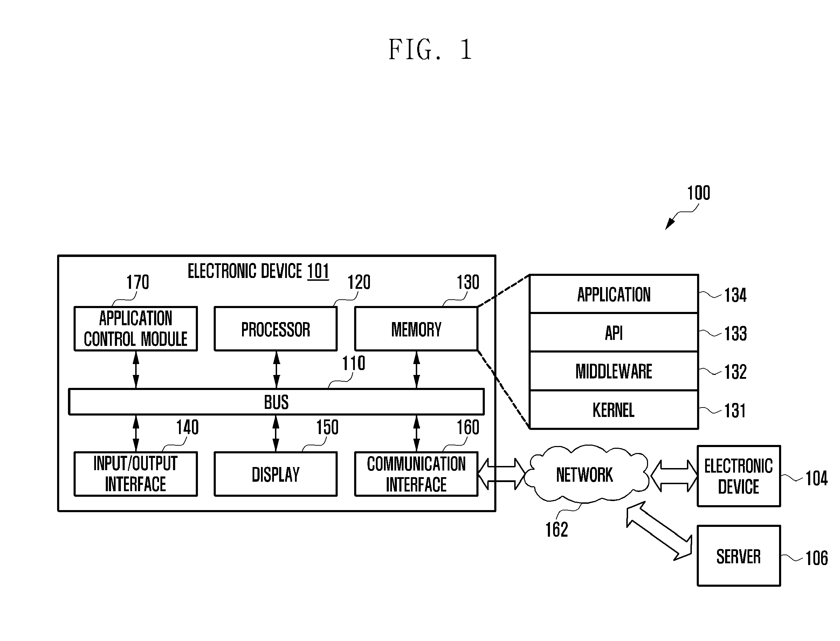

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. Hereinafter, the present disclosure will be described with reference to the accompanying drawings. The present disclosure may have various modifications and embodiments and thus will be described in detail with reference to specific embodiments illustrated in the drawings. However, it should be understood that there is no intent to limit the present disclosure to the particular forms disclosed, but on the contrary, the present disclosure is to cover all modifications, equivalents, and/or alternatives falling within the spirit and scope of the disclosure. In connection with descriptions of the drawings, similar components are designated by the same reference numeral.

The expressions such as "include" and "may include" which may be used in the present disclosure denote the presence of the disclosed functions, operations, and constituent elements and do not limit one or more additional functions, operations, and constituent elements. In the present disclosure, the terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Furthermore, in the present disclosure, the expression "and/or" includes any and all combinations of the associated listed words. For example, the expression "A and/or B" may include A, may include B, or may include both A and B.

Although the expressions such as "first" and "second" in the present disclosure can modify various constituent elements of the present disclosure, they do not limit the constituent elements. For example, the above expressions do not limit the sequence and/or importance of the elements. The above expressions are used merely for the purpose to distinguish an element from the other elements. For example, a first user device and a second user device indicate different user devices although both of them are user devices. For example, a first element could be termed a second element, and similarly, a second element could be also termed a first element without departing from the scope of the present disclosure.

In the case where a component is referred to as being "connected" or "accessed" to other component, it should be understood that not only the component is directly connected or accessed to the other component, but also there may exist another component between them. Meanwhile, in the case where a component is referred to as being "directly connected" or "directly accessed" to other component, it should be understood that there is no component therebetween.

The terms used in the present disclosure are only used to describe specific embodiments, and are not intended to limit the present disclosure. Singular forms are intended to include plural forms unless the context clearly indicates otherwise.

Unless defined otherwise, all terms used herein, including technical and scientific terms, have the same meaning as commonly understood by those of skill in the art to which the present disclosure pertains. Such terms as those defined in a generally used dictionary are to be interpreted to have the meanings equal to the contextual meanings in the relevant field of art, and are not to be interpreted to have ideal or excessively formal meanings unless clearly defined in the present disclosure.

For example, the electronic devices can include at least one of smart phones, tablet personal computers (PCs), mobile phones, video phones, e-book readers, desktop PCs, laptop PCs, netbook computers, personal digital assistants (PDAs), portable multimedia players (PMPs), MP3 players, mobile medical devices, cameras, wearable devices {e.g., head-mounted-devices (HMDs) such as electronic glasses}, electronic clothes, electronic bracelets, electronic necklaces, electronic accessories, electronic tattoos, or smart watches.

The smart home appliance as an example of the electronic device can include at least one of, for example, a television, a Digital Video Disk (DVD) player, an audio, a refrigerator, an air conditioner, a vacuum cleaner, an oven, a microwave oven, a washing machine, an air cleaner, a set-top box, a TV box (e.g., SAMSUNG HOMESYNC, APPLE TV, or GOOGLE TV), a game console, an electronic dictionary, an electronic key, a camcorder, and an electronic picture frame.

According to some embodiments, the electronic device can include at least one of various medical appliances (e.g. Magnetic Resonance Angiography (MRA), Magnetic Resonance Imaging (MRI), Computed Tomography (CT) machine, and an ultrasonic machine), navigation devices, Global Positioning System (GPS) receivers, Event Data Recorders (EDRs), Flight Data Recorders (FDRs), automotive infortainment devices, electronic equipments for ships (e.g. navigation equipments for ships, gyrocompasses, or the like), avionics, security devices, head units for vehicles, industrial or home robots, Automatic Teller Machines (ATM) of banking facilities, and Point Of Sales (POSs) of shops.

According to some embodiments, the electronic device can include at least one of a part of furniture or a building/structure, an electronic board, an electronic signature receiving device, a projector, and various kinds of measuring instruments (e.g., a water meter, an electric meter, a gas meter, and a radio wave meter). Electronic devices according to various embodiments of the present disclosure can be one or more combinations of the above-described devices. Also, the electronic device according to the present disclosure can be a flexible device. Further, the electronic devices according to various embodiments of the present disclosure are not limited to the above-described devices.

Hereinafter, an electronic device according to various embodiments of the present disclosure will be described with reference to the accompanying drawings. The term "a user" used in various embodiments can refer to a person who uses electronic devices or a device (e.g., an artificial intelligence electronic device) that uses electronic devices.

FIG. 1 illustrates a network environment 100 including an electronic device 101 according to various embodiments of the present disclosure. Referring to FIG. 1, the electronic device 101 can include a bus 110, a processor 120, a memory 130, an input/output interface 140, a display 150, a communication interface 160, and an application control module 170.

The bus 110 can be a circuit to connect the above-described components with each other and to transfer communication (for example, a control message) between the components.

For example, the processor 120 can receive instructions, through the bus 110, from the aforementioned other components (for example, the memory 130, the input/output interface 140, the display 150, the communication interface 160, and the application control module 170), decipher the received instructions, and perform calculation or data processing according to the deciphered instructions.

The memory 130 can store instructions or data received from the processor 120 or other components (for example, the input/output interface 140, the display 150, the communication interface 160, the application control module 170 and the like) or generated by the processor 120 or other components. The memory 130 can include programming modules such as, for example, a kernel 131, a middleware 132, an application Programming Interface (API) 133, or an application 134. Each of the programming modules described above can be configured by software, firmware, hardware, or a combination of two or more thereof.

The kernel 131 can control or manage system resources (for example, the bus 110, the processor 120, the memory 130 or the like) which are used for performing operations or functions implemented by other programming modules, for example the middleware 132, the API 133 or the application 134. Further, the kernel 131 can provide an interface through which the middleware 132, the API 133, and the application 134 can access individual components of the electronic device 101 to control or manage them.

The middleware 132 can serve as an intermediary such that the API 133 or the application 134 can communicate with the kernel 131 to transmit/receive data. Further, in relation to requests for operation received from the application 134, the middleware 132 can control (for example, scheduling or load-balancing) the operation requests using, for example, a method of determining priorities for using system resources (for example, the bus 110, the processor 120, the memory 130 or the like) of the electronic device 101 with respect to at least one of the applications 134.

The API 133 is an interface by which the application 134 controls functions provided from the kernel 131 or the middleware 132, and can include, for example, at least one interface or function (for example, instructions) for file control, window control, image processing, or text control.

According to the various embodiments of the present disclosure, the application 134 can include a Short Message Service (SMS)/Multimedia Message Service (MMS) application, an e-mail application, a calendar application, an alarm application, a health care application (for example, an application for measuring an exercise amount or a blood sugar), an environmental information application (for example, an application for providing information on atmospheric pressure, humidity, or temperature). Additionally or alternatively, the application 134 can be an application related to information exchange between the electronic device 101 and an external electronic device (for example, an electronic device 104). The application related to the information exchange can include, for example, a notification relay application for transferring specific information to the external electronic device or a device management application for managing the external electronic device.

For example, the notification relay application can include a function of transferring notification information generated in other applications (for example, the SMS/MMS application, the e-mail application, the health care application, or the environmental information application) of the electronic device 101 to external electronic device (e.g., the electronic device 104). Additionally or alternatively, the notification relay application can receive notification information from, for example, external electronic device (for example, the electronic device 104) and provide the same to a user. The device management application can manage (for example, install, delete, or update), for example, at least some functions (for example, turning the external electronic device (or some components) on or off, or adjusting the brightness (or resolution) of a display) of the external electronic device (for example, the electronic device 104) that communicates with the electronic device 101, applications executed in the external electronic device, or services (for example, a phone call service or a message service) provided in the external electronic device.

According to various embodiments, the application 134 can include applications that are designated according to attributes (for example, the type of electronic device) of the external electronic device (for example, the electronic device 104). For example, in a case in which the external electronic device is an MP3 player, the application 134 can include an application related to the reproduction of music. Similarly, in a case in which the external electronic device is a mobile medical appliance, the application 134 can include an application related to health care. According to an embodiment, the application 134 can include at least one of an application designated to the electronic device 101 and an application received from the external electronic device (for example, a server 106 or the electronic device 104).

The input/output interface 140 can transfer instructions or data input from a user through an input/output device (for example, a sensor, a keyboard, or a touch screen) to, for example, the processor 120, the memory 130, the communication interface 160, or the application control module 170 through the bus 110. For example, the input/output interface 140 can provide the processor 120 with data for a user's touch which is input through the touch screen. Further, through the input/output device (for example, a speaker or a display), the input/output interface 140 can output instructions or data received from the processor 120, the memory 130, the communication interface 160, or the application control module 170 through the bus 110. For example, the input/output interface 140 can output voice data processed through the processor 120 to the user through a speaker.

The display 150 can display various pieces of information (for example, multimedia data or text data) to the user.

The communication interface 160 can connect communication between the electronic device 101 and the external electronic device (for example, the electronic device 104 or the server 106). For example, the communication interface 160 can be connected to a network 162 through wireless or wired communication to communicate with the external device. The wireless communication can include at least one of, for example, Wi-Fi, BLUETOOTH (BT), Near Field Communication (NFC), Global Positioning System (GPS) and cellular communication (for Long Term Evolution (LTE), LTE-Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM) or the like). The wired communication can include at least one of, for example, a Universal Serial Bus (USB), a High Definition Multimedia Interface (HDMI), Recommended Standard 232 (RS-232), and a Plain Old Telephone Service (POTS).

According to an embodiment of the present disclosure, the network 162 can be a telecommunication network. The communication network can include at least one of a computer network, the Internet, the Internet of things, and a telephone network. According to an embodiment, a protocol (for example, a transport lay protocol, a data link layer protocol, or a physical layer protocol) for communication between the electronic device 101 and the external device can be supported by at least one of the application 134, the application programming interface 133, the middleware 132, the kernel 131, and the communication interface 160.

The application control module 170 can process at least some pieces of information acquired from other components (for example, the processor 120, the memory 130, the input/output interface 140, and the communication interface 160), and can provide the processed information to the user through various methods. For example, the application control module 170 can recognize a connection component included in the electronic device 101, store information on the access component in the memory 130, and execute the application 134 based on the information of the connection component.

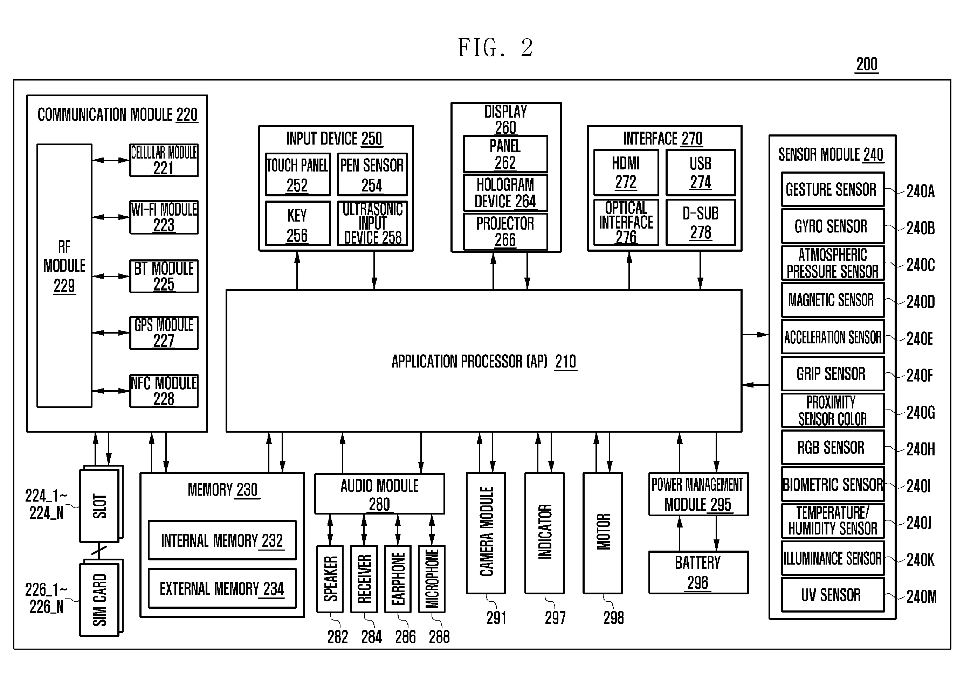

FIG. 2 is a block diagram of an electronic device 200 according to various embodiments of the present disclosure. The electronic device 200 can constitute, for example, all or a part of the electronic device 101 shown in FIG. 1. Referring to FIG. 2, the electronic device 200 can include at least one Application Processor (AP) 210, a communication module 220, a Subscriber Identification Module (SIM) card 224, a memory 230, a sensor module 240, an input device 250, a display module 260, an interface 270, an audio module 280, a camera module 291, a power management module 295, a battery 296, an indicator 297, and a motor 298.

The AP 210 can control a plurality of hardware or software components connected to the AP 210 by driving an operating system or an application program and perform processing of various data including multimedia data and calculations. The AP 210 can be implemented by, for example, a System on Chip (SoC). According to an embodiment, the AP 210 can further include a Graphic Processing Unit (GPU).

The communication module 220 (for example, the communication interface 160) can perform data transmission/reception in communication between the electronic device 200 (for example, the electronic device 101) and other electronic devices (for example, the electronic device 104 and the server 106) connected thereto through the network. According to an embodiment, the communication module 220 can include a cellular module 221, a Wi-Fi module 223, a BT module 225, a GPS module 227, an NFC module 228, and a Radio Frequency (RF) module 229.

The cellular module 221 can provide a voice call, a video call, a message service, or an Internet service through a communication network (for example, LTE, LTE-A, CDMA, WCDMA, UMTS, WiBro, GSM or the like). Further, the cellular module 221 can distinguish and authenticate electronic devices within a communication network by using a subscriber identification module (for example, the SIM card 226). According to an embodiment, the cellular module 221 can perform at least some of functions which the AP 210 can provide. For example, the cellular module 221 can perform at least a part of a multimedia control function.

According to an embodiment, the cellular module 221 can include a Communication Processor (CP). Further, the cellular module 221 can be implemented as, for example, a SoC. Although FIG. 2 illustrates that the components such as the cellular module 221 (for example, communication processor), the memory 230, and the power management module 295 are separated from the AP 210, the AP 210 can include at least some of the above described components (for example, the cellular module 221) according to an embodiment.

According to an embodiment, the AP 210 or the cellular module 221 (for example, the communication processor) can load instructions or data received from at least one of a non-volatile memory and other components connected to each of the AP 210 and the cellular module 221 to a volatile memory and can process the loaded instructions or data. Further, the AP 210 or the cellular module 221 can store data received from or generated by at least one of the other components in a non-volatile memory.

Each of the Wi-Fi module 223, the BT module 225, the GPS module 227, and the NFC module 228 can include, for example, a processor for processing data transmitted/received through the corresponding module. In FIG. 2, the cellular module 221, the WiFi module 223, the BT module 225, the GPS module 227, and the NFC module 228 are illustrated as blocks separated from each other, but at least some (for example, two or more) of the cellular module 221, the WiFi module 223, the BT module 225, the GPS module 227, and the NFC module 228 can be included in one Integrated Chip (IC) or one IC package. For example, at least some (for example, a communication processor corresponding to the cellular module 221 and a Wi-Fi processor corresponding to the Wi-Fi module 223) processors corresponding to the cellular module 225, the Wi-Fi module 223, the BT module 225, the GPS module 227, and the NFC module 228, respectively, can be implemented as one SoC.

The RF module 229 can transmit/receive data, for example, an RF signal. Although not illustrated, the RF module 229 can include, for example, a transceiver, a Power Amp Module (PAM), a frequency filter, a Low Noise Amplifier (LNA) or the like. Further, the RF module 229 can further include a component, such as a conductor or a conducting wire, for transmitting/receiving electronic waves over free air space in wireless communication. Although FIG. 2 illustrates that the cellular module 221, the WiFi module 223, the BT module 225, the GPS module 227, and the NFC module 228 share one RF module 229, at least one of the cellular module 221, the WiFi module 223, the BT module 225, the GPS module 227, and the NFC module 228 can transmit/receive an RF signal through a separate RF module according to an embodiment.

The SIM cards 226_1 to 226_N can be cards including a subscriber identification module and can be inserted into slots 224_1 to 224_N formed on a particular portion of the electronic device. The SIM cards 226_1 to 226_N can include unique identification information (for example, Integrated Circuit Card IDentifier (ICCID)) or subscriber information (for example, International Mobile Subscriber Identity (IMSI).

The memory 230 (for example, the memory 130) can include an internal memory 232 or an external memory 234. The internal memory 232 can include at least one of a volatile memory (for example, a Dynamic Random Access Memory (DRAM), a Static RAM (SRAM), a Synchronous Dynamic RAM (SDRAM) or the like) or a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory or the like).

According to an embodiment, the internal memory 232 can be a Solid State Drive (SSD). The external memory 234 can further include a flash drive, for example, a Compact Flash (CF), a Secure Digital (SD), a Micro Secure Digital (Micro-SD), a Mini Secure Digital (Mini-SD), an extreme Digital (xD), a memory stick or the like. The external memory 234 can be functionally connected with the electronic device 200 through various interfaces. According to an embodiment, the electronic device 200 can further include a storage device (or storage medium) such as a hard drive.

The sensor module 240 can measure a physical quantity or detect an operation state of the electronic device 200, and can convert the measured or detected information to an electronic signal. The sensor module 240 can include at least one of, for example, a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, a Red/Green/Blue (RGB) sensor), a bio-sensor 240I, a temperature/humidity sensor 240J, an illumination sensor 240K, and an Ultra Violet (UV) sensor 240M. Additionally or alternatively, the sensor module 240 can include, for example, an E-nose sensor (not illustrated), an electromyography (EMG) sensor (not illustrated), an electroencephalogram (EEG) sensor (not illustrated), an electrocardiogram (ECG) sensor (not illustrated), an Infrared (IR) sensor, an iris sensor (not illustrated), a fingerprint sensor and the like. The sensor module 240 can further include a control circuit for controlling one or more sensors included therein.

The input device 250 can include a touch panel 252, a (digital) pen sensor 254, a key 256, or an ultrasonic input device 258. The touch panel 252 can recognize a touch input through at least one of, for example, a capacitive type, a resistive type, an infrared type, an electromagnetic induction type, and an acoustic wave type. The touch panel 252 can further include a control circuit. In the capacitive type or the electromagnetic induction type, a physical contact input or a proximity input is possible. The touch panel 252 can also further include a tactile layer. In this case, the touch panel 252 can provide a tactile reaction to the user.

The (digital) pen sensor 254 can be implemented, for example, using a method identical or similar to a method of receiving a touch input of the user, or using a separate recognition sheet. The key 256 can include, for example, a physical button, an optical key or keypad. The ultrasonic input device 258 is a device which can detect an acoustic wave using a microphone (for example, microphone 288) of the electronic device 200 through an input tool generating an ultrasonic signal to identify data and can perform wireless recognition. According to an embodiment, the electronic device 200 can also receive a user input from an external device (for example, a computer or server) connected thereto, using the communication module 220.

The display module 260 (for example, the display 150) can include a panel 262, a hologram device 264, or a projector 266. For example, the panel 262 can be a Liquid Crystal Display (LCD) or an Active Matrix Organic Light Emitting Diode (AM-OLED). The panel 262 can be implemented to be, for example, flexible, transparent, or wearable. The panel 262 can also be configured as one module together with the touch panel 252. The hologram device 264 can show a stereoscopic image in the air by using interference of light. The projector 266 can project light onto a screen to display an image. For example, the screen can be located inside or outside the electronic device 200. According to an embodiment, the display 260 can further include a control circuit for controlling the panel 262, the hologram device 264, or the projector 266.

The interface 270 can include, for example, a High-Definition Multimedia Interface (HDMI) 272, a Universal Serial Bus (USB) 274, an optical interface 276, or a D-subminiature (D-sub) 278. The interface 270 can be included in, for example, the communication interface 160 illustrated in FIG. 1. Additionally or alternatively, the interface 270 can include, for example, a Mobile High-definition Link (MHL) interface, a Secure Digital (SD) card/Multi-Media Card (MMC) interface, or an Infrared Data Association (IrDA) standard interface.

The audio module 280 can bilaterally convert a sound and an electronic signal. At least some components of the audio module 280 can be included in, for example, the input/output interface 140 illustrated in FIG. 1. The audio module 280 can process voice information input or output through, for example, a speaker 282, a receiver 284, earphones 286, or the microphone 288.

The camera module 291 is a device which can photograph a still image and a moving image. According to an embodiment, the camera module 291 can include one or more image sensors (for example, a front sensor or a rear sensor), a lens (not illustrated), an Image Signal Processor (ISP) (not illustrated) or a flash (not illustrated) (for example, an LED or xenon lamp).

The power management module 295 can manage power of the electronic device 200. Although not illustrated, the power management module 295 can include, for example, a Power Management Integrated Circuit (PMIC), a charger Integrated Circuit (IC), or a battery or fuel gauge.

The PMIC can be mounted to, for example, an integrated circuit or a SoC semiconductor. Charging methods can be classified into a wired charging method and a wireless charging method. The charger IC can charge a battery and prevent over voltage or over current from being flowed from a charger. According to an embodiment, the charger IC can include a charger IC for at least one of the wired charging method and the wireless charging method. The wireless charging method includes, for example, a magnetic resonance scheme, a magnetic induction scheme, or an electromagnetic wave scheme and can have an additional circuit for wireless charging, such as a coil loop, a resonance circuit, a rectifier circuit and the like.

The battery gauge can measure, for example, the remaining amount of battery, a voltage, current, or temperature during the charging. The battery 296 can store or generate electricity, and can supply power to the electronic device 200 by using the stored or generated electricity. The battery 296 can include, for example, a rechargeable battery or a solar battery.

The indicator 297 can display a particular status of the electronic device 200 or a part thereof (for example, the AP 210), for example, a booting status, a message status, a charging status or the like. The motor 298 can convert an electrical signal to a mechanical vibration. Although not illustrated, the electronic device 200 can include a processing unit (for example, GPU) for supporting a mobile TV. The processing unit for supporting the mobile TV can process media data according to a standard of Digital Multimedia Broadcasting (DMB), Digital Video Broadcasting (DVB), media flow or the like.

The aforementioned components of the electronic device according to various embodiments of the present disclosure can be configured by one or more components, and the name of the corresponding element can vary depending on a type of the electronic device. The electronic device according to the various embodiments of the present disclosure can include at least one of the aforementioned components or can further include other additional elements, or some of the aforementioned components can be omitted. Also, some of the components of the electronic device according to various embodiments of the present disclosure are coupled to each other to form a single entity, and can equivalently execute functions of the corresponding components which are not coupled.

The term "module" used in various embodiments of the present disclosure can refer to, for example, a "unit" including one of hardware, software, and firmware, or a combination of two or more thereof. The term "module" can be interchangeable with other terms such as unit, logic, logical block, component, or circuit. A "module" can be a minimum unit of integratively configured components or a part thereof. A "module" can be a minimum unit for performing one or more functions or a part thereof. A "module" can be mechanically or electronically implemented. For example, a "module" according to various embodiments of the present disclosure can include at least one of an Application-Specific Integrated Circuit (ASIC) chip, a Field-Programmable Gate Arrays (FPGAs), and a programmable-logic device for performing operations which has been known or will be developed in the future.

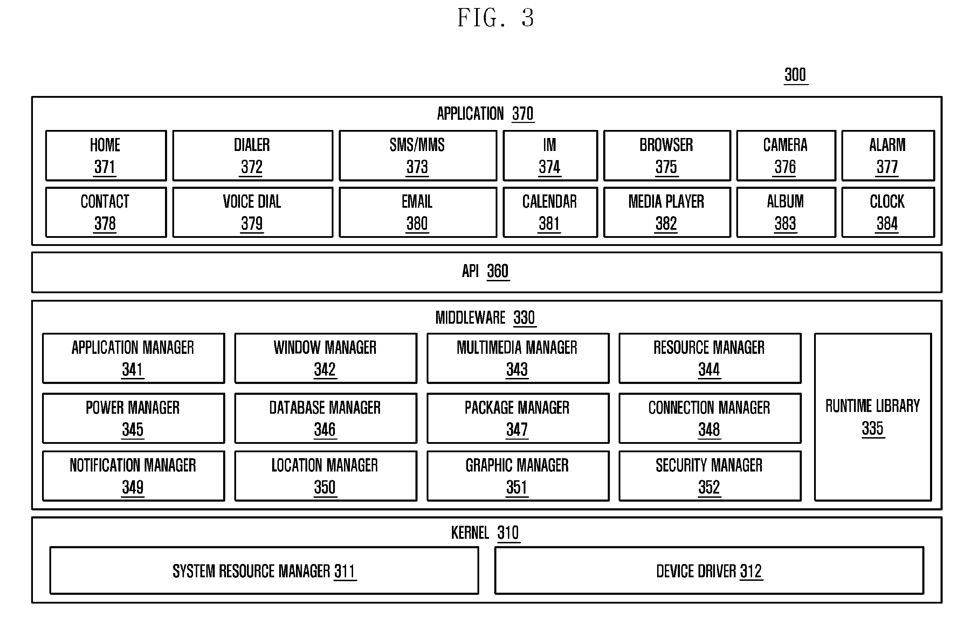

FIG. 3 illustrates a programming module 300 according to various embodiments of the present disclosure.

The programming module 300 can be included in the electronic device 101 illustrated in FIG. 1. At least a part of the programming module 300 can be configured with software, firmware, hardware, or a combination of two or more thereof.

The programming module 300 according to an embodiment can include a kernel 310, a middleware 330, an Application Programming Interface (API) 360, and/or an application 370.

The kernel 310 (for example, the kernel 131) can include a system resource manager 311 and/or a device driver 312.

The middleware 330 (for example, the middleware 132) can include, for example, at least one of a run time library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and/or a security manager 352.

The programming module 300 can be implemented in hardware (for example, the hardware 200) and include an Operating System (OS) for controlling resources related to the electronic device (for example, the electronic device 101) or various applications (for example, applications 370) executed under the OS. The OS can be, for example, Android, iOS, Windows, Symbian, Tizen, Bada or the like.

The system resource manager 311 can include, for example, a process manager 313, a memory manager 315, or a file system manager 317. The system resource manager 311 can perform control, allocation, or collection of system resources.

The device driver 312 can include, for example, a display driver 314, a camera driver 316, a BLUETOOTH driver 318, a shared memory driver 320, a USB driver 322, a keypad driver 324, a Wi-Fi driver 326, and/or an audio driver 328. Further, according to an implementation example, the device driver 312 can include an Inter-Process Communication (IPC) driver (not shown).

The middleware 330 can include, for example, a plurality of modules implemented in advance to provide functions which the applications 370 require in common. Furthermore, the middleware 330 can provide functions through the API 360 such that the applications 370 can efficiently use limited system resources within the electronic device.

The runtime library 335 can include a library module used by a compiler to add a new function through a programming language while the applications 370 are being executed. For example, the run-time library 335 can perform an input/output, memory management, or a function for an arithmetic function.

For example, the application manager 341 can manage a life cycle of at least one of the applications 370. The window manager 342 can manage Graphical User Interface (GUI) resources used on the screen. The multimedia manager 343 can discern formats required for reproducing various media files and can perform encoding or decoding of the media files using a codec suitable for the corresponding format. The resource manager 344 can manage resources such as a source code, a memory, and a storage space of at least one of the applications 370.

The power manager 345 can operate together with a basic input/output system (BIOS) to manage a battery or power and provide power information necessary for the operation. The database manager 346 can manage the generation, the search for, or the change of a database to be used by at least one of the applications 370. The package manager 347 can manage installation or update of an application distributed in the form of package file.

For example, the connectivity manager 348 can manage wireless connectivity such as Wi-Fi or Bluetooth. The notification manager 349 can display or notify the user of an event such as an arrival message, appointment, proximity notification and the like in such a way that a user is not disturbed. The location manager 350 can manage location information of the electronic device. The graphic manager 351 can manage a graphic effect which will be provided to a user and/or a user interface related to the graphic effect. The security manager 352 can provide all security functions required for system security or user authentication.

When the electronic device (for example, the electronic device 101) has a phone call function, the middleware 330 can further include a telephony manager (not illustrated) for managing a voice or video call function of the electronic device.

The middleware 350 can generate and use a new middleware module through various functional combinations of the aforementioned internal component modules. The middleware 350 can provide modules specialized according to the type of OS in order to provide differentiated functions. Furthermore, the middleware 350 can dynamically remove some of the existing components or add new components. Accordingly, the middleware 320 can omit some of the components described in the embodiments of the present disclosure, further include other components, or replace some components with other components having different names but performing similar functions.

The API 360 (for example, the API 133) is a set of API programming functions, and can have a different configuration according to an operating system. For example, in a case of Android or iOS, one API set can be provided for each of platforms, and in a case of Tizen, two or more API sets can be provided.

The applications 370 (for example, the applications 134) can include, for example, a preloaded application or a third party application.

At least a part of the programming module 300 can be implemented by instructions stored in computer-readable storage media. When the instruction is executed by one or more processors (for example, the processor 210), the one or more processors can perform a function corresponding to the instruction. The computer-readable storage media can be, for example, the memory 230.

Further, at least a part of the programming module 300 can be implemented in, for example, the application processor 210.

At least a part of the programming module 300 can include, for example, a module, a program, a routine, sets of instructions, and a process for performing one or more functions.

The names of the above-described components of the programming module according to the present disclosure can vary depending on the type of electronic device. Further, the programming module according to the present disclosure can include one or more of the aforementioned components, omit some of the components, or further include other additional components.

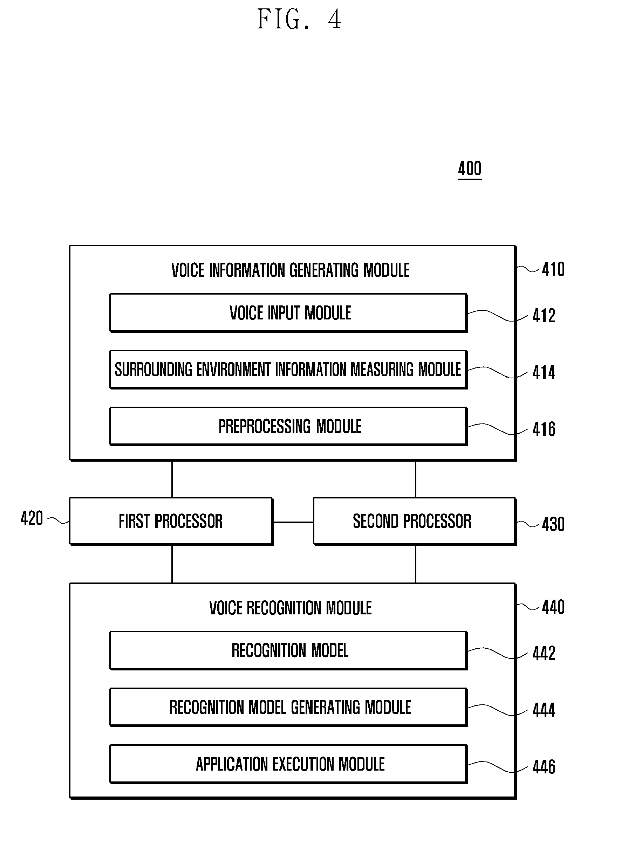

FIG. 4 illustrates a configuration of a voice recognition system according to various embodiments of the present disclosure.

Referring to FIG. 4, a voice recognition system 400 can include a voice information generating module 410, a first processor 420, a second processor 430, and a voice recognition module 440.

The electronic devices 101 and 200 can receive a voice from the user using the voice recognition system 400 and execute the applications 134 and 370 which the user desires to execute based on the voice.

The voice information generating module 410 can receive a voice from the user and generate voice information based on the voice.

The voice information generating module 410 can include a voice input module 412, a surrounding environment information measuring module 414, and a preprocessing module 416.

The electronic devices 101 and 200 can collect voice of the user by using the voice input module 412. For example, the electronic devices 101 and 200 can collect the voice of the user using the microphone 288.

The surrounding environment measuring module 414 can measure surrounding environment information of the electronic devices 101 and 200 by using the voice input module 412. For example, the electronic devices 101 and 200 can measure noise conditions of the surrounding environment by using the microphone 288. Through the measurement, the user can be informed of whether the environment is good for speaking. Specifically, the surrounding environment information measuring module 414 can measure noise level information through the voice input module 412 and suggest speaking in a more silent environment to the user based on the noise level information.

The preprocessing module 416 can transform or refine a sound input through the voice input module 412. The preprocessing module 416 can generate more accurate voice information through preprocessing and generate a more accurate recognition model 442 based on the voice information. The preprocessing module 416 can perform the preprocessing on the input sound through echo cancellation, noise reduction, voice activity detection, end-point detection, or automatic gain control. The preprocessing operation can be simultaneously performed with the input of the voice or performed after the input of the voice.

The first processor 420 is a process which can operate with a low power and can perform a particular function of the electronic devices 101 and 200 or an application.

The first processor 420 can perform a speaker-dependent voice authentication through a keyword designated directly by the user. For example, the first processor 420 can perform the voice authentication by comparing the recognition model 442 pre-stored in the memory 230 of the electronic device 101 or 200 with the input voice.

Meanwhile, the voice recognition performed by the first processor 420 includes an operation of comparing information reflecting a characteristic of a voice to be recognized with the input voice of the user. At this time, the information reflecting the characteristic of the voice to be recognized can be collectively defined as the recognition model 442. The recognition model 442 can be expressed as a statistical model such as a Hidden Markov Model (HMM), a neural network or the like. When a recognition algorithm such as Dynamic Time Warping (DTW) or Vector Quantization (VQ) is used, the recognition model 442 can be expressed by a feature vector column of a voice signal. When a transformation method such as dimensionality reduction or linear transformation is applied to a recognition process, a parameter used for the transformation can be model information. In addition to the above-listed recognition models, various recognition models can be the recognition model and can include information which can represent a voice to be recognized in common. Further, the recognition model 442 can include attribute information of the input voice. For example, the attribute information can include at least one of a length, a size, a number of phonemes, and a length of phonemes of the input voice.

The first processor 420 can compare attribute information of the input voice with pre-stored attribute information of the recognition model 442. When the pieces of attribute information match each other, the first processor 420 can authenticate the input voice as a pre-stored voice of the user.

When the input voice is identified as the pre-stored voice of the user, the first processor 420 can transmit a wake up signal for activating the second processor 430. The first processor 420 can change a state of the second processor 430 from a sleep mode to an active mode by using the wake up signal. Through the change of the state, the second processor 430 can active a voice command function and execute a particular function or application of the electronic device according to the input voice.

The second processor 430 can use more power and more complex functions compared to the first processor 420.

The second processor 430 can receive the wake up signal from the first processor 420 and activate the recognition command function through the wake up signal. When the recognition command function is activated, the second processor 430 can execute a particular function or application of the electronic device by using an application execution module 446.

In an embodiment, the second processor 430 loads at least one of the recognition model generating module 444 and the application execution module 446 from the memory 230 in response to the wake up signal generated by the first processor 420 and executes at least one of the recognition model generating module 444 and the application execution module 446.

In an embodiment, the second processor 430 can inform the user that the recognition command function is activated and ready to receive a voice command from the user. For example, the phrase, "What can I do for you?" can be displayed on the electronic display module 260 or output to the outside through the speaker 282.

The second processor 430 can receive a voice command of the user and execute an application of the electronic device by using the application execution module 446. For example, when the user inputs "What is the weather like now?", information related to the current weather can be output through the display module 260 and/or the speaker 282 to show the user.

The voice recognition module 440 can include the recognition model 442, the recognition model generating module 444, and the application execution module 446.

The recognition model generating module 444 can generate the recognition model 442 based on attribute information of the input voice. The recognition model generating module 444 can receive a predetermined keyword from the user through a voice and generate the recognition model 442 by using the collected voice. Meanwhile, an operation of generating the recognition model 442 using the recognition model generating module 444 can be performed by the first processor 420 or the second processor 430. The generated recognition model 442 can be stored in the memory 230 shared by the first processor 420 and the second processor 430 and can be used when voice authentication is performed by the first processor 420.

The application execution module 446 can execute the application 134 or 370 which the user desires to execute by analyzing the voice command of the user. When the wake up signal is generated by the first processor 420, the recognition command function of the second processor 430 is activated, so the application execution module 446 can execute a particular function or application of the electronic device after receiving a voice command from the user. Meanwhile, an operation of executing the particular function or application of the electronic device by using the application execution module 446 can be performed by the second processor 430.

The electronic device according to various embodiments can include the voice input module for detecting the voice of the user, the first processor for determining at least one piece of attribute information from the voice and authenticating the user by comparing the attribute information with a pre-stored recognition model, and the second processor for, when the attribute information matches the pre-stored recognition model, activating a voice command function, receiving the voice command of the user, and executing an application corresponding to the voice command.

When the attribute information matches the pre-stored recognition model, the first processor can generate a wake up signal and transmit the wake up signal to the second processor.

The second processor can receive the wake up signal and activate the voice command function.

At least one piece of attribute information can include at least one of a length, a size, a number of phonemes, and a length of phonemes of the voice.

The recognition model can be a speaker-dependent voice recognition model including at least one piece of attribute information.

The electronic device further includes the surrounding environment information measuring module and can measure environment information around the user by using the surrounding environment information measuring module.

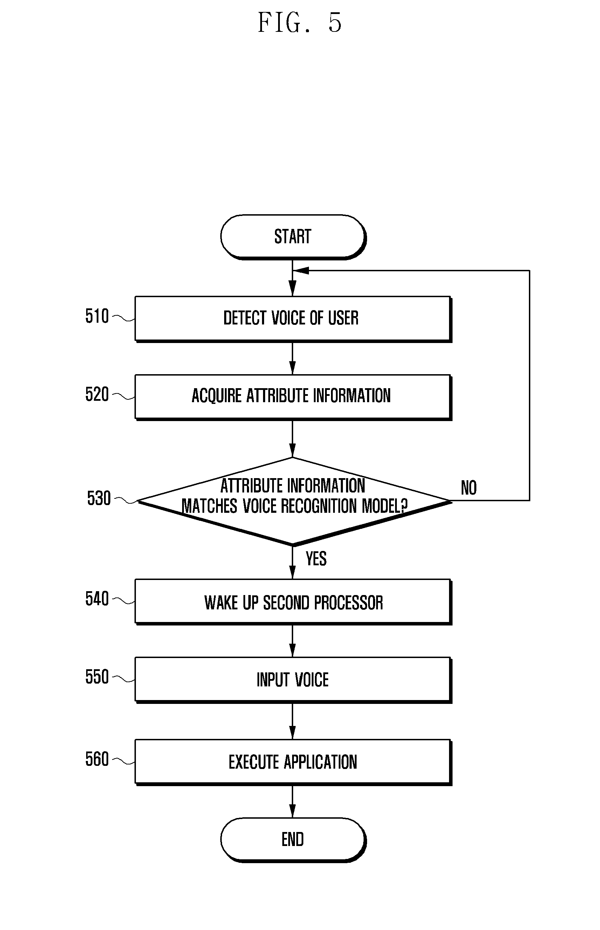

FIG. 5 is a flowchart illustrating a method of inputting a voice into the electronic device according to one of various embodiments of the present disclosure and executing an application.

The electronic device 200 can detect a voice of the user in operation 510.

The electronic device 200 can transform or refine the sound input through the voice input module 412 by using the preprocessing module 416. For example, echo cancellation, noise reduction, voice activity detection, end-point detection, or automatic gain control can be performed. Such a preprocessing function can be performed before or after voice information is generated. When the voice input is identified through the voice input module 412, the electronic device 200 can generate the voice information refined through the preprocessing module 416.

The electronic device 200 can acquire attribute information of the voice detected by the first processor in operation 520. For example, the attribute information can include at least one of a length, a size, a number of phonemes, and a length of phonemes of the input voice.

The electronic device 200 can determine whether attribute information of the voice detected by the first processor matches a pre-stored recognition model in operation 530.

When the detected voice and the pre-stored recognition model match each other, the electronic device 200 can authenticate the input voice as the pre-stored voice of the user.

Meanwhile, the voice recognition performed by the first processor 420 includes an operation of comparing information reflecting a characteristic of a voice to be recognized with the input voice of the user. At this time, the information reflecting the characteristic of the voice to be recognized can be collectively defined as the recognition model 442. The recognition model 442 can be expressed as a statistical model such as a Hidden Markov Model (HMM), a neural network or the like. When a recognition algorithm such as Dynamic Time Warping (DTW) or Vector Quantization (VQ) is used, the recognition model 442 can be expressed by a feature vector column of a voice signal. When a transform method such as dimensionality reduction or linear transformation is applied to a recognition process, a parameter used for the transform can be model information. In addition to the above-listed recognition models, various recognition models can be the recognition model and can include information which can represent a voice to be recognized in common. Further, the recognition model 442 can include attribute information of the input voice. For example, the attribute information can include at least one of a length, a size, a number of phonemes, and a length of phonemes of the input voice.

In an embodiment, the electronic device 200 can measure similarity between the input voice information and the recognition model. For example, a method such as a Viterbi algorithm, a forward-backward probability measurement, or Dynamic Time Warping (DTW) can be used to measure the similarity between the recognition model and the voice information. When the similarity is larger than a pre-configured reference, the electronic device 200 can determine that the input voice information matches the recognition model.

When the input voice information matches the pre-stored recognition model, the electronic device 200 can proceed to operation 540 and activate the second processor 430.

That is, when the user authentication is completed by the first processor 420 of the electronic device 200, the electronic device can generate a wake up signal and activate a voice command function of the second processor 430 of the electronic device 200.

Meanwhile, when the attribute information of the detected voice does not match the pre-stored recognition model, the electronic device can proceed to operation 510 and detect the voice of the user. The electronic device 200 lets the user hear voice information corresponding to the generated recognition model. Further, the electronic device 200 can suggest an additional voice input to the user to change the recognition model. When the user inputs a new voice, the electronic device 200 can update the pre-stored recognition model by using the additionally input voice information.

The electronic device 200 can execute the voice command function by using the second processor 430 and receive a voice command from the user in operation 550.

The electronic device 200 can transform or refine the sound input through the voice input module 412 by using the preprocessing module 416. For example, echo cancellation, noise reduction, voice activity detection, end-point detection, or automatic gain control can be performed. Such a preprocessing function can be performed before or after voice information is generated. When the voice input is identified through the voice input module 412, the electronic device 200 can generate the voice information refined through the preprocessing module 416.

When the voice input is identified, the electronic device 200 can inform the user through a user interface (for example, a screen message, a sound, a vibration or the like) that the voice input is made.

The electronic device 200 can execute an application corresponding to the voice command of the user by using the second processor 430 in operation 560.

The electronic device can execute a particular function or application of the electronic device according to the input voice information.

Accordingly, the electronic device 200 can reinforce a security function through the speaker-dependent voice recognition and reduce the power consumption burden by dividing the roles of the first processor and the second processor. Further, the electronic device 200 can activate the voice command function through the voice recognition alone without a separate touch event or key input.

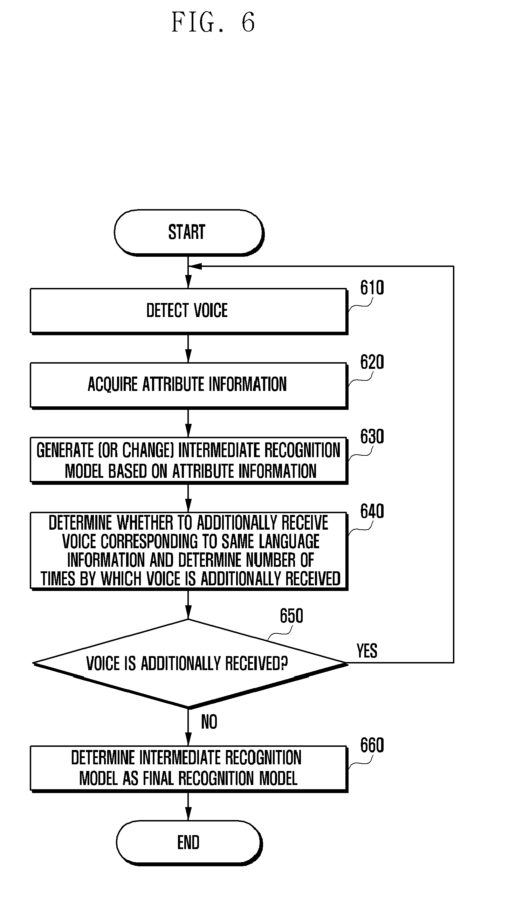

FIG. 6 is a flowchart illustrating a method of generating a recognition model of the electronic device according to various embodiments of the present disclosure. The electronic device 200 can generate or change the recognition model by using a voice of the user or a keyword designated by the user.

The electronic device 200 can detect a voice of the user in operation 610.

The electronic device 200 can transform or refine the sound input through the voice input module 412 by using the preprocessing module 416. For example, echo cancellation, noise reduction, voice activity detection, end-point detection, or automatic gain control can be performed. Such a preprocessing function can be performed before or after voice information is generated. When the voice input is identified through the voice input module 412, the electronic device 200 can generate the voice information refined through the preprocessing module 416.

The electronic device 200 can receive a plurality of voices corresponding to the same language information to generate a more accurate recognition model in operation 610.

The electronic device 200 can acquire attribute information of the generated voice information in operation 620. For example, the attribute information can include at least one of a length, a size, a number of phonemes, and a length of phonemes of the input voice.

The electronic device 200 can generate or change an intermediate recognition model based on the attribute information in operation 630.

The electronic device 200 can generate or change the intermediate recognition model using a method, for example, maximum likelihood optimization, gradient descent optimization, or maximum likelihood linear regression such as an expectation-maximization algorithm. The electronic device 200 can store the generated or changed recognition model in the memory 230.

The electronic device 200 can determine whether to additionally receive a voice corresponding to the same language information and determine a number of times by which a voice is additionally received in operation 640.

The electronic device 200 can compare a plurality of pieces of voice information corresponding to the same language information and display information related to a result of the comparison. For example, the electronic device 200 can measure similarity between a plurality of pieces of voice information. The electronic device 200 can measure the similarity whenever voice information is generated or when the number of pieces of generated voice information is larger than or equal to a preset number. For example, the electronic device 200 can use a scheme including Dynamic Time Warping (DTW), cross correlation, coherence or the like to measure the similarity. When the similarity is smaller than a preset value, the electronic device 200 can determine that the plurality of pieces of voice information corresponding to the same language information do not match each other. The electronic device 200 can determine whether to additionally receive a voice corresponding to the same language information and a number of times by which a voice is additionally received.

Meanwhile, the electronic device 200 can control the number of additional voice inputs to be larger as a variance value of the voice information is larger. Further, the electronic device 200 can control the number of additional voice inputs to be larger as a total sum of signal to noise is larger.

When it is determined that additional voice reception is required to generate the recognition model in operation 640, the electronic device 200 can return to step 610 and detect the voice of the user.

When it is determined that additional voice reception to generate the recognition model is not required in operation 640, the electronic device 200 can proceed to step 660 and determine the intermediate recognition model as a final recognition model. The electronic device 200 can store the determined final recognition model in the memory 230 and authenticate the voice of the user by using the final recognition model.

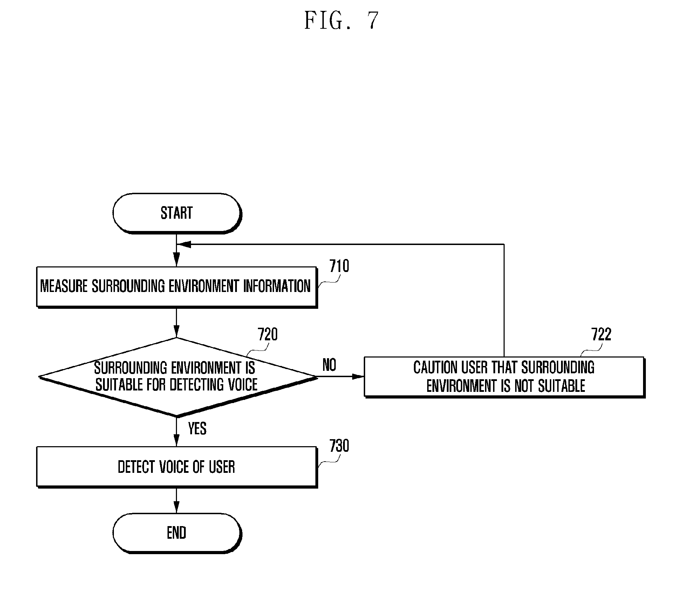

FIG. 7 is a flowchart illustrating a method of detecting a voice in consideration of an environment around the electronic device according to various embodiments of the present disclosure.

The electronic device 200 can measure surrounding environment information of the electronic device in operation 710. For example, the electronic device 200 can identify a noise level by using the surrounding environment information measuring module 414.

The electronic device 200 can determine whether the surrounding environment including the electronic device is suitable for detecting the voice of the user in operation 720.

When the surrounding environment including the electronic device is not suitable for voice detection, the electronic device 200 can proceed to operation 722 to caution the user that the environment is not suitable for the voice detection and can proceed to step 710 to measure surrounding environment information of the electronic device.

For example, the electronic device 200 can display a message that recommends the user to attempt a voice input in a more silent environment according to a result of the noise level. The electronic device 200 can periodically identify the noise level and provide the user with the noise level by using at least one of the display module 260, the speaker 282, and the motor 298. Accordingly, the electronic device 200 can induce the user to move to an environment more suitable for the voice input.

When the surrounding environment including the electronic device is suitable for the voice detection, the electronic device 200 can proceed to operation 730 and detect the voice of the user. The electronic device 200 can store the input voice as voice information and use the stored voice information for authenticating the voice or executing an application.

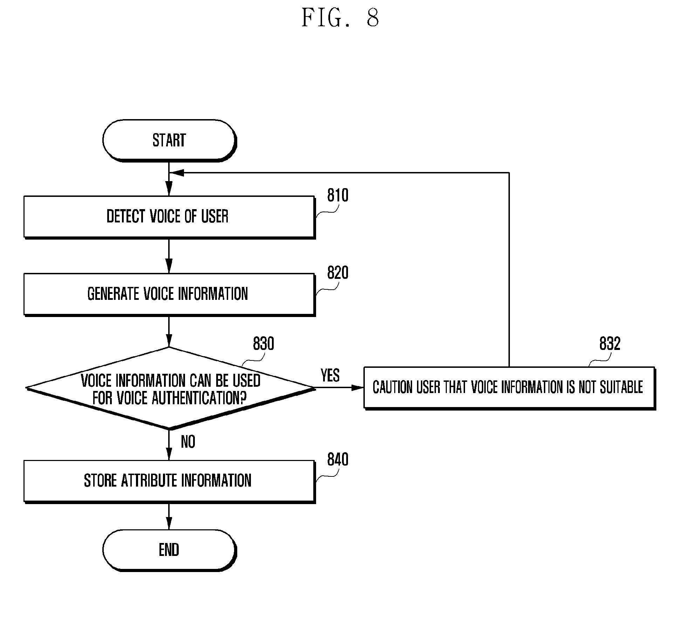

FIG. 8 is a flowchart illustrating a method of generating and verifying voice information by the electronic device according to various embodiments of the present disclosure.

The electronic device can detect a voice of the user in operation 810 and generate voice information based on the detected voice in operation 820.

For example, the electronic device 200 can transform or refine the sound input through the voice input module 412 using the preprocessing module 416. For example, echo cancellation, noise reduction, voice activity detection, end-point detection, or automatic gain control can be performed. Such a preprocessing function can be performed before or after voice information is generated. When the voice input is identified through the voice input module 412, the electronic device 200 can generate the voice information refined through the preprocessing module 416.

The electronic device 200 can determine whether the voice information is suitable for authenticating the voice in operation 830.

Specifically, the electronic device 200 can identify whether attribute information required for the voice authentication can be obtained using the input voice information. For example, the attribute information can include a length, a size (volume), a number of phonemes, and a length of phonemes of the input voice. The electronic device 200 can determine whether the input voice is used for the voice authentication in consideration of a case where the length of the input voice is smaller than a preset value, a case where the volume is smaller than a preset value, or a case where the volume is larger than a preset value.

When the voice information is not suitable for being used for the voice authentication, the electronic device 200 can proceed to operation 832 to caution the user that the voice information is not suitable and proceed to operation 810 to receive the voice of the user again.

When the voice information is suitable for being using for the voice authentication, the electronic device 200 can proceed to operation 840 to store attribute information of the input voice information. The electronic device 200 can generate or change the recognition model using the stored attribute information and use the attribute information for authenticating the user.

A method of executing a voice command function in the electronic device according to various embodiments can include an operation for detecting a voice of the user, an operation for determining at least one piece of attribute information from the voice, and an operation for authenticating the user by comparing the attribute information with a pre-stored recognition model.

When the attribute information matches the pre-stored recognition model, the method can include an operation for activating the voice command function, an operation for receiving a voice command of the user, and an operation for executing an application corresponding to the voice command.

The operation for authenticating the user can be performed by the first processor and the operation for executing the application corresponding to the voice command can be performed by the second processor.

At least one piece of attribute information can include at least one of a length, a size, a number of phonemes, and a length of phonemes of the voice.

The recognition model can be a speaker-dependent voice recognition model including at least one piece of attribute information.

The operation for detecting the voice can include an operation for detecting a sound including the voice of the user, an operation for measuring surrounding environment information of the user based on the sound, and an operation for informing the user of the surrounding environment information.

According to various embodiments, at least a part of the devices (for example, the processor 120 and modules) or the methods (for example, the operations) according to the present disclosure can be implemented by a command stored in a computer-readable storage medium in a programming module form. When the command is executed by one or more processors, the one or more processors can perform a function corresponding to the command.

Although not shown, the computer-readable storage medium can be, for example, a storage or a memory. At least some of the programming modules can be implemented (for example, executed) by, for example, the processor. At least a part of the programming module can include, for example, a module, a program, a routine, a set of instructions, or a process for performing at least one function.

The computer readable recording media can include a magnetic media such as a hard disc, a floppy disc, and a magnetic tape, an optical recording media such as a Compact Disc Read Only Memory (CD-ROM) and a Digital Versatile Disc (DVD), a magneto-optical media such as a floptical disk, and a hardware device, such as a Read Only Memory (ROM), a Random Access Memory (RAM), and a flash memory, specifically configured to store and execute program instructions. In addition, the program instructions can include high class language codes, which can be executed in a computer by using an interpreter, as well as machine codes made by a compiler. The aforementioned hardware device can be configured to operate as one or more software modules in order to perform the operation of the present disclosure, and vice versa.

When commands are executed by one or more processors, a machine-readable storage device storing the commands according to various embodiments is configured to allow the one or more processors to perform one or more operations. The one or more operations can include an operation for detecting a voice of the user, an operation for determining at least one piece of attribute information from the voice, and an operation for authenticating the user by comparing the attribute information with a pre-stored recognition model.

When the attribute information matches the pre-stored recognition model, the method can include an operation for activating the voice command function, an operation for receiving a voice command of the user, and an operation for executing an application corresponding to the voice command.

The programming modules according to the present disclosure may include one or more elements among the above-described elements, exclude some of them, or further include other elements. The operations performed by the modules, the programming modules, or other elements according to the various embodiments of the present disclosure may be executed through a sequential, parallel, repeated, or heuristic method. Also, a few operations may be executed based on a different order, may be omitted, or may additionally include another operation.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of performing a voice command function in an electronic device, the method comprising:
detecting voice of a user;
acquiring one or more pieces of attribute information from the voice; and
authenticating the user by comparing the attribute information with pre-stored authentic attribute information, using a recognition model.

2. The method of claim 1, further comprising, when the attributes information matches the recognition mode:
activating a voice command function;
receiving a voice command from the user; and
executing an application corresponding to the voice command.

3. The method of claim 2, wherein the authenticating the user is performed by a first processor and the executing the application corresponding to the voice command is performed by a second processor, different from the first processor.

4. The method of claim 2, wherein, when the attribute information matches the recognition model, the first processor is configured to generate a wake up signal and transmit the wake up signal to the second processor and the second processor is configured to receive the wake up signal and activate the voice command function.

5. The method of claim 1, wherein the recognition model is a speaker-dependent voice recognition model including the one or more pieces of attribute information which comprise at least one of a length, a size, a number of phonemes, and a length of phonemes of the voice.

6. The method of claim 1, wherein the detecting the voice comprises:
detecting a sound including the voice of the user;
measuring information on surrounding environment of the user, based on the sound; and
informing the user of the information on the surrounding environment.

7. An electronic device, comprising:
a voice input module configured to detect a voice of a user;
a first processor configured to:
acquire one or more pieces of attribute information from the voice and
authenticate the user by comparing the attribute information with a recognition model; and
a second processor configured to:
when the attribute information matches the recognition mode, activate the voice command function,
receive a voice command of the user, and
execute an application corresponding to the voice command.

8. The electronic device of claim 7, wherein, when the attribute information matches the recognition model, the first processor is configured to generate a wake up signal and transmit the wake up signal to the second processor.and the second processor is configured to receive the wake up signal and activate the voice command function.

9. The electronic device of claim 7, wherein the recognition model is a speaker-dependent voice recognition model including the one or more pieces of attribute information which comprise at least one of a length, a size, a number of phonemes, and a length of phonemes of the voice.

10. The electronic device of claim 7, wherein the first processor is configured to measure a noise level in surrounding environment of the user through the voice input module.

11. A computer-readable medium storing commands, when executed by one or more processors, causes the one or more processors to perform acts including:
detecting a voice of a user;
acquiring one or more pieces of attribute information from the voice; and
authenticating the user by comparing the attribute information with a recognition model.

12. The computer-readable medium of claim 11, wherein the commands further causes the one or more processors to perform acts including:
activating the voice command function;
receiving a voice command of the user; and
executing an application corresponding to the voice command.

13. The computer-readable medium of claim 11, wherein, when the attribute information matches the recognition model, the first processor is configured to generate a wake up signal and transmit the wake up signal to the second processor and the second processor is configured to receive the wake up signal and activate the voice command function.

14. The computer-readable medium of claim 11, wherein the recognition model is a speaker-dependent voice recognition model including the one or more pieces of attribute information which comprise at least one of a length, a size, a number of phonemes, and a length of phonemes of the voice.

15. The computer-readable medium of claim 11, wherein the detecting the voice comprises:
detecting a sound including the voice of the user;
measuring information on surrounding environment of the user, based on the sound; and
informing the user of the information on the surrounding environment.
